(19) Europäisches Patentamt
European Patent Office
Office européen des brevets

(11) **EP 1 118 192 B1**

(12) **EUROPEAN PATENT SPECIFICATION**

(45) Date of publication and mention
of the grant of the patent:
**13.10.2010 Bulletin 2010/41**

(51) Int Cl.:
*H04L 1/00* (2006.01)    *H04L 1/18* (2006.01)

(21) Application number: **99942101.9**

(86) International application number:
**PCT/US1999/018222**

(22) Date of filing: **11.08.1999**

(87) International publication number:
**WO 2000/010298 (24.02.2000 Gazette 2000/08)**

(54) **A FLEXIBLE FRAME STRUCTURE FOR A CDMA WIRELESS NETWORK**

FLEXIBLE RAHMENSTRUKTUR FÜR EIN DRAHTLOSES CDMA-NETZ

STRUCTURE DE TRAME SOUPLE DESTINEE A UN RESEAU SANS FIL AMCR

(84) Designated Contracting States:
**DE FR GB**

(30) Priority: **17.08.1998 US 96886 P**

(43) Date of publication of application:
**25.07.2001 Bulletin 2001/30**

(73) Proprietor: **Ericsson AB**
**Stockholm (SE)**

(72) Inventors:
• **GUO, Ning**
**Nepean, Ontario K2J 4P8 (CA)**
• **FONG, Mo-Han**
**Verdun,**
**Quebec H3E 1H2 (CA)**

• **GUTIERREZ, Alberto**
**Plano, TX 75025 (US)**
• **TONG, Wen**
**Ottawa, Ontario K2C 3L7 (CA)**

(74) Representative: **Mackenzie, Andrew Bryan et al**
**Scott & York**
**Intellectual Property Limited**
**45 Grosvenor Road**
**St. Albans**
**Hertfordshire AL1 3AW (GB)**

(56) References cited:
**JP-A- 09 214 474    US-A- 4 939 731**
**US-A- 5 313 473    US-A- 5 477 550**
**US-A- 5 600 663    US-A- 5 629 948**
**US-A- 5 719 883**

**Description**

**Cross Reference**

This application claims the benefit of Provisional Application Serial No. 60/096,886 filed August 17, 1998.

**Technical Field**

This invention relates generally to management techniques for a wireless communications network and, more particularly, to a system and method for structuring a frame format in a wireless cellular or personal communications service network.

**Background**

There are many types of frequency division multiplexed network technologies, including global systems mobile (GSM), time division multiple access (TDMA), and advanced mobile phone service (AMPS) and common frequency technologies like code division multiple access (CDMA). Likewise, there are many types of packet data technology that are being implemented with these mobile network technologies. For example, global packet radio services (GPRS) and enhanced data rate for GSM evolution (EDGE) technologies are being developed to implement packet data technology for personal communications services (PCS) such as GSM and TDMA networks, respectively.

These technologies are discussed by various standards, such as the Internet Engineering Task Force (IETF), the International Telecommunications Union (ITU) for International Mobile Telecommunications 2000 (IMT-2000) and the Telecommunications Industry Association (TIA) Standards. These standards define, among other things, specific layering techniques for categorizing specific functions for the transfer of frames, or groups, of data in a physical medium (e.g., air or wire). The standards also define specific parameters for the frame structure.

Many parameters related to the framing of data in a wireless network have a strong impact on the performance of the network. For voice application, a frame error correction code (FEC) and a frame length are chosen to provide sufficient performance, and acceptable voice quality, with respect to a signal to noise ratio (SNR), delay, and a frame error rate (FER). For data applications, the requirements for acceptable performance with respect to FER, SNR, and delay will differ for those of voice applications. The FEC employed for data applications may differ from that employed in voice applications, and the relationship between FER and SNR will differ as well. Furthermore, the FER, SNR, and delay requirements will differ between circuit and packet data applications. Further still, radio environment (e.g., multipath fading) will also have an impact on the FER performance and its relationship with SNR and frame length. Therefore, for these technologies, it is desirable to parameterize the data frames in order to achieve efficient operation depending on the radio environment, application, and deployment situation.

Consider for example a wireless network using CDMA2000 technology. CDMA2000 refers to a third generation wireless technology, or 3$^{rd}$ generation wireless cellular/PCS technology, based on interim standard IS-95 CDMA. CDMA2000 is similar to wideband CDMA, or "W-CDMA," which refers to a 3$^{rd}$ generation wireless cellular/PCS technology based on spread spectrum CDMA proposed in Europe. Only CDMA2000 will be discussed for the sake of simplify and clarity, it being understood that different network technologies, including W-CDMA, will behave similarly.

Two types of coding that may be used with CDMA2000 are Turbo and Convolutional codes. For Turbo codes, the trend is for a decreasing SNR, given a fixed bit error rate (BER) or FER, as the frame length increases. For Convolutional codes, the BER remains relatively constant with frame length, for a constant SNR. Also, the FER degrades as the frame length increases. These two coding types will require different frame configurations for optimal performance.

Another factor in choosing a frame configuration is the complexity of the mobile unit. The specific choice of frame configuration will have both complexity and performance implications.

In furtherance of the CDMA2000 example, a typical frame may be 20 milliseconds (ms). As transmission rates increase, the number of bits in a 20ms frame becomes very large. Several problems often result. For one, many wireless communication systems are tailored for voice instead of data. Decoding delays are less desirable in voice transmissions; bit errors are less desirable in data transmissions.

Considering these and other inherent problems, it is desired to have a telecommunications system that provides sufficient parameterization of the frame configurations in order to maximize the efficient operation of the cellular/PCS network.

It is also desired to have a telecommunications system that is flexible for balancing decoding delays vs. frame errors in an efficient manner.

It is further desired to maintain acceptable bit error rates and frame error rates.

It is still further desired to have a system that accommodates different transmission rates.

Background art is provided in JP 09,214,474A (Sanyo Electric Co. Ltd.), which was published on 15 August

**EP 1 118 192 B1**

1997. It is assumed that US 5,844,918, published on 1 December 1998, represents an English translation of JP 09,214,474A. US 5,844,918 discloses an example of an error correcting code, including basic data and BCH (Bose-Chaudhuri-Hocquenghem) based parity code appended thereto, which is divided into smaller packets. An error detecting code is appended to each of the thus-divided packets, forming transmission data. An error detecting operation is carried out with respect to each packet using the error detecting code. If a packet is found to contain errors, a request for retransmission of that packet is sent.

**Summary**

In response to the problems and needs described above, provided is a flexible frame arrangement for a wireless communications network, such as CDMA2000 or W-CDMA.

The present invention is a method for communicating in a personal communications service wireless network as defined in claims 1 and 8 and an apparatus as defined in claims 9 and 16.

In one embodiment, a signal for transmission in the network includes several frames for transferring data between network nodes. At least one of the frames includes a hierarchical sub-frame structure having a physical layer frame, an interleaver block, a forward error control (FEC) block, and an automatic repeat request (ARQ) block.

In some embodiments, the frame structure is used in a spread spectrum wireless network. The FEC blocks include error control information, with each FEC block being subdivided into one or more ARQ blocks. Each ARQ block may include information bits and overhead bits such as cyclic redundancy code (CRC) and zero bits.

In some embodiments, the number of ARQ blocks is responsive to different radio environments for producing a relatively high throughput. Also, the number of ARQ blocks can change for voice or data information.

In some embodiments, the frame structure supports different types of code, including a Convolutional code, where the overhead bits (zero bits) of the ARQ blocks effectively block the Convolutional code.

In some embodiments, the frame structure modifies the number of FEC blocks and ARQ blocks to balance requirements for data transmission or voice transmission. The number of blocks can also be modified to promote efficient operation depending on the radio environment and mobile station complexity. Furthermore, the number of blocks can be modified to accommodate different transmission rates.

A benefit of the present invention is that it parameterizes the data frames used in these networks to promote efficient operation depending on the radio environment and mobile station complexity.

Another benefit of the present invention is that it accommodates different transmission rates.

Another benefit of the present invention is that it supports the frame coding as in the IS-95 standard.

**Brief Description of the Drawings**

Fig. 1 is a schematic block diagram of a simplified CDMA network.
Fig. 2 is a sub-frame structure for a frame used in the CDMA network of Fig. 1.

**Detailed Description**

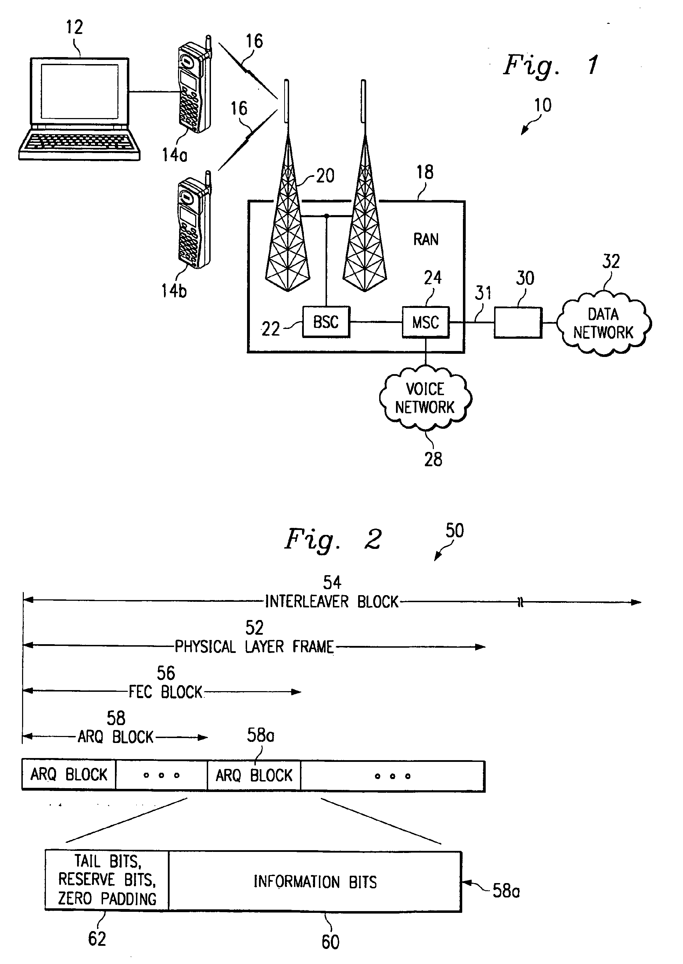

Fig. 1 depicts a communication network 10 for implementing one embodiment of the present invention. The network 10 includes a computer 12 coupled to a first mobile station 14a and a second, stand-alone mobile station 14b. The computer 12 may be a laptop computer and the mobiles stations 14a, 14b (referenced collectively as mobiles 14) may be wireless telephones. It is understood that the following disclosure provides many different embodiments, or examples, for implementing different features. Techniques and requirements that are only specific to certain embodiments should not be imported into other embodiments. Also, specific examples of networks, components, and formats are described below to simplify the present disclosure. These are, of course, merely examples and are not intended to limit the invention from that described in the claims.

The mobiles 14 communicate with a Radio Access Network (RAN) 18 via an air interface 16. In the present embodiment, the air interface 16 utilizes CDMA2000 technology to transfer messages between the mobiles 14 and the RAN 18 via certain radio frequency (air interface) channels.

In the present embodiment, the RAN 18 includes a base transceiver station 20, a base station controller 22, and a mobile switching station 22. It is understood that the RAN 18 is simplified for the sake of clarity, and may also include other necessary elements. At intermittent times, the mobiles 14 will measure a signal quality parameter of transmissions from specific base transceiver stations. The quality parameter may be a received signal strength (RSSI), or other appropriate parameters such as energy per chip per total noise (EC/IO), bit error rate (BER), frame error rate (FER), or color code.

The mobile switching station 24 of the RAN 18 is coupled to a voice network 28. The voice network 28 includes the Public Switch Telephone Network (PSTN, not shown) which utilizes necessary hardware and software, such as DMS-100, DMS-250, or DMS-500 switches manufactured by Nortel Networks Corporation, to direct calls placed and received from voice terminals, such as telephones, and/or from data terminals, such as computers.

The PSTN may also accommodate wireless calls from the mobiles 14 via the voice network 28. The description of the voice network 28, including the PSTN and the switches, has been greatly simplified because these elements are well known to those of ordinary skill in the art.

The RAN 18 is also coupled to a data network node 30 via an interface 31. The data network node 30 is further coupled to a data/IP network 32 that provides data services via components such as a gateway switch, a gatekeeper switch, DMS switches and data terminals (not shown). The gatekeeper switch functions as the intelligence of a voice over IP network and can control and optimize a service provider's network regarding bandwidth management, subscriber access, billing and security services, etc. It is understood that the RAN 18 and other components of the network 10 have been discussed by various standards, to define, among other things, specific layering techniques for categorizing specific functions for the transfer of frames, or groups, of data in a physical medium (e.g., air or wire).

When coupled to the data network node 30, the mobiles 14 may be considered a host that changes its point of attachment from one network to another. Therefore, the data network node 30 may operate as, or be connected to, a home agent or foreign agent of the data/IP network 32.

Specific nodes of the network 10, including the mobiles 14, the data network node 30, and the RAN 18, include processing systems for controlling operation of the network. Specifically, these nodes include a processor such as a central processing unit or a digital signal processing unit, a memory system including volatile and non-volatile memory, and an interface system, all for performing specific programming tasks. In many instances, the programming tasks are distributed across different components, while in other instances, the programming tasks are primarily performed in only one node. These nodes can thereby operate as transmitters, receivers, encoders, decoders, interleavers and other functional devices, as required by the data being sent and the overall network 10.

Referring now to Fig. 2, the reference numeral 50 designates a generalized frame structure for supporting sub-frames within the communication network 10 of Fig. 1. As discussed above, the present embodiment of the network 10 is described in the context of CDMA2000 technology. However, the discussion provided herein brings certain modification and enhancements to many conventional cellular/PCS technologies. Specifically, the frame structure 50 is parameterized so that it can be configured for efficient operation depending on the RAN 18 and the mobiles 14. As discussed further below, the frame structure 50 provides several degrees of freedom, all or part of which may be selectively adopted for different embodiments.

The frame structure 50 provides a hierarchical configuration of elements that support sub-frame operation. The structure includes a physical layer frame 52, an interleaver block 54, an FEC block 56, and an automatic repeat request (ARQ) block 58. In general, the interleaver block 54 may encompass a plurality of physical layer frames 52, or the physical layer frame may encompass a plurality of interleaver blocks. In conventional systems, every physical layer frame has a group of information bits and overhead bits, including cyclic redundancy code (CRC) bits for error detection, tail bits (e.g., zero bits), etc. For the sake of simplicity and clarity, the remainder of this disclosure assumes that the physical layer frame 52 and the interleaver block 54 are the same length.

In the present embodiment, the physical layer frame 52 includes one or more FEC blocks 56 and each FEC block includes one or more ARQ blocks 58. Each ARQ block 58 is similarly constructed. For the sake of example, an ARQ block 58a is expanded to illustrate its layout. In general, the ARQ block 58a includes information bits 60 and overhead bits 62.

In the present embodiment, however, the set of information bits 60 and overhead bits 62 are the smallest parameter in the ARQ block. For the remaining discussion, certain parameters of the frame structure 50 are defined as follows:

$N_{INT}$    = the length of the interleaver block;
$N_F$    = the number of FEC blocks 56 per frame;
$N_A$    = the number of ARQ blocks 58 per frame;
$N_I$    = the number of information bits in each ARQ block;
$N_{CRC}$    = the number of CRC bits in each ARQ block;
$N_Z$    = the number of zero bits in each ARQ block.

It is noted that the number of zero bits $N_Z$ can be zero. Fur such a case, one set of zero bits may be appended to the physical layer frame to aid in decoding the FEC code.

Table 1 below provides examples of some frame configurations for 19.2 kbps and 38.4 kbps frame rates. Referring to the first row of Table 1, in this example, there is one FEC block 56 and one ARQ block 58 per physical layer frame 52. For this example, the zero bits of the ARQ block serve as zero bits for the FEC code. Referring to the second and third rows of Table 1, in these examples, there are two frame configurations which support a 38.4 kbps frame rate. The second row is similar to the first row, but at twice the data rate. The third row has two ARQ blocks 58 and one FEC block 56 per physical layer frame 52. The FEC encoding is over the same number of bits for both the second and third rows (768 bits in the present example), but the example of the third row contains more overhead since it contains additional CRC and zero bits, as compared to the example of the second row. However, the third row supports retransmission of the ARQ block 58, while the first and second rows do not.

Table 1: Examples of 19.2 kbps and 38.4 kbps frame configurations

| | $N_F$ | $N_A$ | $N_I$ | $N_{CRC}$ | $N_Z$ |
|---|---|---|---|---|---|
| 19.2 kbps with one ARQ block per frame | 1 | 1 | 360 | 16 | 8 |
| 38.4 kbps with one ARQ block per frame | 1 | 1 | 744 | 16 | 8 |
| 38.4 kbps with two ARQ blocks per frame | 1 | 2 | 360 | 16 | 8 |

Typically, ARQ blocks require that, once data is sent, the receiver must check the error correction to determine if the data is correct. The receiver will ask for a retransmission if the data is not correct. In some cases, depending on the length of the ARQ block, it may be desirable to use different types of error correction. Also, it may be desirable to set the number of ARQ blocks according to the type of FEC code (e.g., Turbo or Convolutional). It may also be desirable to limit the length of the ARQ block 58 for other parameter purposes.

For the case of Convolutional FEC codes, zero bits in the ARQ block 58 effectively block the Convolutional code. That is, the number of zero bits is equal to the number of memory elements of the Convolutional Code. This is true even if the length of the FEC block 56 is configured to contain multiple ARQ blocks. To better illustrate this point, consider the third row of Table 1. The encoder receives the first ARQ block 58 followed by the second ARQ block, and encodes each one in the order received. Each ARQ block consists of 360 information bits followed by 16 CRC bits and 8 zero bits. The 8 zero bits of the first ARQ block effectively block the Convolutional code because the output bits of the FEC code for the second ARQ block are independent of the first ARQ block. Thus each ARQ block can be decoded independently without a loss in performance (with the exception of overhead) with respect to decoding both ARQ blocks simultaneously.

Turbo encoders consist of two constituent Convolutional codes, each separated by an interleaver either in parallel or serial configuration. In either configuration, the Turbo interleaver will scramble the ARQ block 58 such that the entire FEC block 56 must be decoded simultaneously. In other words, when Turbo codes are employed, the FEC block 56 is decoded simultaneously, even though an FEC block contains more than one ARQ block. As a result, different performance characteristics and sub-frame configurations will arise.

Table 2, below, summarizes parameters that are compatible with CDMA2000 and support existing data rates. Extension of this table for higher rates is straightforward. In general, there are multiple ARQ Blocks per FEC Block and:

$$1 \le N_F \le N_A.$$

Exemplary choices for $N_A$ that support backward compatibility are listed for each data rate along with the number of information bits per ARQ Block ($N_I$).

Table 2: Frame parameters for rate 1/3 FEC code

| Data Rate | $N_A$ | $N_F$ | $N_I$ | $N_{CRC}$ | $N_T$ |
|---|---|---|---|---|---|
| 19.2 kbps | $1 \le N_A \le 2$ | $1 \le N_F \le N_A$ | $N_A = 1, N_I = 360$<br>$N_A = 2, N_I = 168$ | 16 | 8 |
| 19.2 kbps | $1 \le N_A \le 2$ | $1 \le N_F \le N_A$ | $N_A = 2, N_I = 172$ | 16 | 0* |
| 38.4 kbps | $1 \le N_A \le 4$ | $1 \le N_F \le N_A$ | $N_A = 1, N_I = 744$<br>$N_A = 2, N_I = 360$<br>$N_A = 4, N_I = 168$ | 16 | 8 |
| 76.8 kbps | $1 \le N_A \le 8$ | $1 \le N_F \le N_A$ | $N_A = 1, N_I = 1512$<br>$N_A = 2, N_I = 744$<br>$N_A = 4, N_I = 360$ | 16 | 8 |

(continued)

| Data Rate | $N_A$ | $N_F$ | $N_I$ | $N_{CRC}$ | $N_T$ |
|---|---|---|---|---|---|
| | | | $N_A = 8$, $N_I = 168$ | | |
| 153.6 kbps | $1 \leq N_A \leq 16$ | $1 \leq N_F \leq N_A$ | $N_A = 1$, $N_I = 3048$<br>$N_A = 2$, $N_I = 1512$<br>$N_A = 4$, $N_I = 744$<br>$N_A = 8$, $N_I = 360$<br>$N_A = 16$, $N_I = 168$ | 16 | 8 |
| 307.2 kbps | $1 \leq N_A \leq 32$ | $1 \leq N_F \leq N_A$ | $N_A = 1$, $N_I = 6120$<br>$N_A = 2$, $N_I = 3048$<br>$N_A = 4$, $N_I = 1512$<br>$N_A = 8$, $N_I = 744$<br>$N_A = 16$, $N_I = 360$<br>$N_A = 32$, $N_I = 168$ | 16 | 8 |
| 614.4 kbps | $1 \leq N_A \leq 64$ | $1 \leq N_F \leq N_A$ | $N_A = 1$, $N_I = 12264$<br>$N_A = 2$, $N_I = 6120$<br>$N_A = 4$, $N_I = 3048$<br>$N_A = 8$, $N_I = 1512$<br>$N_A = 16$, $N_I = 744$<br>$N_A = 32$, $N_I = 360$<br>$N_A = 64$, $N_I = 168$ | 16 | 8 |
| * since no zero bits are included in the ARQ block, then in this example, 8 zero bits are appended to each physical layer frame. | | | | | |

For the case of Turbo codes, it is desirable to support large FEC blocks since the performance of the code improves with a larger block size. A large number of bits per FEC block, however, causes complexity at the receiver for decoding very large frames. For this reason, it may be desirable to adjust interleaver block size and FEC block size in an application which employs Turbo codes.

For Convolutional code, the BER is responsive to FEC block size. For medium to large FEC block sizes (block sizes less than approximately 5 constraint lengths), the BER is relatively constant with FEC block size, for a fixed SNR. For small to medium block sizes, the BER is a function of the FEC block size. Therefore, for former cases, frame throughput $R_{THR}$ is responsive to the length of the ARQ block (designated with the variable $L$) and a retransmission probability $P_{RETX}$. The probability of retransmission $P_{RETX}$ increases monotonically as the ARQ block length $L$ increases. This is because for the case of Convolutional code, the FER decreases for larger block sizes even as the SNR and BER remain constant. Consider the following equation, which applies to a 20ms frame length:

$$R_{THR} = L(1\text{-}P_{RETX})/20.$$

This phenomenon will have a large impact on overhead due to retransmission of frames over the air interface. The smaller the ARQ block length $L$ (in milliseconds), the less overhead due to retransmissions. On the other hand, the overhead due to CRC and zero bits increases with a smaller ARQ block length $L$. Thus, there is a tradeoff between ARQ Block length due to probability of retransmissions and overhead due to CRC and zero bits.

For relatively short ARQ blocks, there is a degradation of the throughput $R_{THR}$ (and of efficiency) at low BER probabilities due to additional overhead from CRC and padding bits. However, as the BER probability increases ($P_{RETX}$ increases), the throughput $R_{THR}$ is better with small ARQ block lengths $L$ since there is more overhead in retransmission of the entire FEC block compared to retransmission of an ARQ block.

Given the above observations and frame structure, the network 10 is given the flexibility for efficient use of the network. Also, the network 10 is flexible for balancing decoding delays vs. bit errors in an optimum manner. Furthermore, the data frames are parameterized to promote efficient operation depending on the radio environment and mobile station complexity, while maintaining acceptable bit error rates and frame error rates and accommodating different transmission rates. Further still, the frame structure 50 is relatively easy to implement because it requires minimum changes for the frame coding.

Although illustrative embodiments of the invention have been shown and described, other modifications, changes, and substitutions are intended in the foregoing disclosure. Also, different considerations may require different lengths and number of frames and blocks. For example, power control considerations may fix the length of the physical layer frame 52 so that the interleaver technique needs to spread out burst errors over multiple physical layer frames. Therefore, different interleaver lengths for different physical layer frame lengths may be required. Accordingly, it is appropriate that the appended claims be construed broadly and in a manner consistent with the scope of the disclosure.

**Claims**

1. A method for communicating in a personal communications service wireless network (10), the method comprising:

   receiving information bits from a mobile station;
   delivering the information bits to a second network; and
   arranging the information bits into a frame structure comprising one or more forward error control, FEC, blocks (56) for transmitting error control information;
   wherein each FEC block (56) is further subdivided into one or more automatic repeat request, ARQ, blocks (58) so that each ARQ block (58) includes information bits (60) and overhead bits (62); and
   wherein the overhead bits (62) include cyclic redundancy code, CRC, bits but no convolutional tail bits, and wherein one or more convolutional tail bits are appended to the frame structure.

2. A method as claimed in Claim 1 wherein the step of arranging supports multiple wireless environments in the spread spectrum wireless network so that the number of ARQ blocks (58) is responsive to the environment for producing a relatively high throughput.

3. A method as claimed in Claim 1 wherein the step of arranging supports multiple communication types in the spread spectrum wireless network, and wherein the number of ARQ blocks (58) is responsive to whether the communication type is voice or data.

4. A method as claimed in Claim 1 wherein the step of arranging supports a Convolutional FEC code, and wherein the overhead bits (62) of the ARQ blocks (58) effectively blocks the Convolutional FEC code.

5. A method as claimed in Claim 1 wherein the step of arranging modifies the number of FEC blocks (56) and ARQ blocks (58) to balance requirements for data transmission and voice transmission.

6. A method as claimed in Claim 1 wherein the step of arranging modifies the number of FEC blocks (56) and ARQ blocks (58) to promote efficient operation depending on a wireless environment and mobile station complexity.

7. A method as claimed in Claim 1 wherein the step of arranging modifies the number of FEC blocks (56), the number of ARQ blocks (58), and the number of information bits (60) in the ARQ blocks (58), to accommodate different transmission rates.

8. A method for communicating in a personal communications service wireless network (10), the method comprising:

   receiving information bits from a mobile station;
   delivering the information bits to a second network; and
   arranging the information bits into a frame structure comprising one or more forward error control, FEC, blocks (56) for transmitting error control information;
   wherein each FEC block (56) is further subdivided into one or more automatic repeat request, ARQ, blocks (58) so that each ARQ block (58) includes information bits (60) and overhead bits (62); and

   wherein the overhead bits include both cyclic redundancy code, CRC, bits and convolutional tail bits.

9. An apparatus for use in a personal communications service wireless network (10), the apparatus comprising:

   an input arranged to receive information bits from a mobile station;
   an output arranged to deliver the information bits to a second network; and

processing means arranged to arrange the information bits into a frame structure comprising one or more forward error control, FEC, blocks (56) for transmitting error control information;

wherein each FEC block (56) is further subdivided into one or more automatic repeat request, ARQ, blocks (58) so that each ARQ block (58) includes information bits (60) and overhead bits (62); and

wherein the overhead bits (62) include cyclic redundancy code, CRC, bits but no convolutional tail bits, and wherein one or more convolutional tail bits are appended to the frame structure.

10. An apparatus as claimed in claim 9 wherein the frame structure supports multiple wireless environments in the spread spectrum wireless network so that the number of ARQ blocks (58) is responses to the environment for producing a relatively high throughput.

11. An apparatus as claimed in claim 9 wherein the frame structure supports multiple communication types in the spread spectrum wireless network, and wherein the number of ARQ blocks (58) is responsive to whether the communication type is voice or data.

12. An apparatus as claimed in claim 9 wherein the frame structure supports a Convolutional FEC code, and wherein the overhead bits (62) of the ARQ blocks (58) effectively block the Convolutional FEC code.

13. An apparatus as claimed in claim 9 wherein the number of FEC blocks (56) and ARQ blocks (58) are modifiable to balance requirements for data transmission and voice transmission.

14. An apparatus as claimed in claim 9 wherein the number of FEC blocks (56) and ARQ blocks (58) are modifiable to promote efficient operation depending on a wireless environment and mobile station complexity.

15. An apparatus as claimed in claim 9 wherein the number of FEC blocks (56), the number of ARQ blocks (58), and the number of information bits (60) in the ARQ blocks (58) are modifiable to accommodate different transmission rates.

16. An apparatus for use in a personal communications service wireless network (10), the apparatus comprising:

an input arranged to receive information bits from a mobile station;

an output arranged to deliver the information bits to a second network; and

processing means arranged to arrange the information bits into a frame structure comprising one or more forward error control, FEC, blocks (56) for transmitting error control information;

wherein each FEC block (56) is further subdivided into one or more automatic repeat request, ARQ, blocks (58) so that each ARQ block (58) includes information bits (60) and overhead bits (62); and

wherein the overhead bits include both cyclic redundancy code (CRC) bits and convolutional tail bits.

**Patentansprüche**

1. Verfahren zur Kommunikation in einem drahtlosen persönlichen Kommunikationsdienst-Netz (10), wobei das Verfahren Folgendes umfasst:

Empfangen von Informations-Bits von einer mobilen Station;

Liefern der Informations-Bits an ein zweites Netzwerk; und

Anordnen der Informations-Bits in einer Rahmenstruktur, die ein oder mehrere Vorwärtsfehlerkorrektur-, FEC-, Blöcke (56) zur Übertragung von Fehlersteuerinformation umfasst;

wobei jeder FEC-Block (56) weiterhin in ein oder mehrerer automatische Wiederholungs-Anforderungs-, ARQ-, Blöcke (58) unterteilt ist, so dass jeder ARQ-Block (58) Informations-Bits (60) und Zusatz-Bits (62) einschließt; und

wobei die Zusatz-Bits (62) zyklische Blocksicherungscode-, CRC-, Bits, jedoch keine Faltungs-Endbits einschließen, und wobei ein oder mehrere Faltungs-Endbits an die Rahmenstruktur angehängt werden.

2. Verfahren nach Anspruch 1, bei dem der Schritt des Anordnens mehrfache drahtlose Umgebungen in einem drahtlosen Spreizspektrum-Netz unterstützt, so dass die Anzahl von ARQ-Blöcken (58) auf die Umgebung anspricht, um einen relativ hohen Durchsatz zu erzeugen.

3. Verfahren nach Anspruch 1, bei dem der Schritt des Anordnens mehrfache Kommunikations-Typen in einen drahtlosen Spreizspektrum-Netzwerk unterstützt, und bei dem die Anzahl von ARQ-Blöcken (58) davon abhängt, ob der Kommunikations-Typ Sprache oder Daten ist.

4. Verfahren nach Anspruch 1, bei dem Schritt des Anordnens einen Faltungs-FEC-Code unterstützt, und bei dem die Zusatz-Bits (62) der ARQ-Blöcke (58) effektiv den Faltungs-FEC-Code blockieren.

5. Verfahren nach Anspruch 1, bei dem der Schritt des Anordnens die Anzahl der FEC-Blöcke (56) und der ARQ-Blöcke (58) modifiziert, um Anforderungen für die Datenübertragung und die Sprachübertragung auszugleichen.

6. Verfahren nach Anspruch 1, bei dem der Schritt des Anordnens die Anzahl der FEC-Blöcke (56) und der ARQ-Blöcke (58) modifiziert, um eine effiziente Betriebsweise in Abhängigkeit von einer drahtlosen Umgebung und einer Mobilstations-Komplexität zu fördern.

7. Verfahren nach Anspruch 1, bei dem der Schritt des Anordnens die Anzahl der FEC-Blöcke (56), die Anzahl der ARQ-Blöcke (58) und die Anzahl von Informations-Bits (60) in den ARQ-Blöcken (58) modifiziert, um unterschiedliche Übertragungsraten zu berücksichtigen.

8. Verfahren zur Kommunikation in einem persönlichen drahtlosen Kommunikationsdienst-Netz (10), wobei das Verfahren Folgendes umfasst:

Empfangen von Informations-Bits von einer Mobilstation;
Liefern der Informations-Bits an ein zweites Netzwerk; und
Anordnen der Informations-Bits in einer Rahmenstruktur, die ein oder mehrere Vorwärtsfehlersteuer-, FEC-, Blöcke (56) zum Übertragen von Fehler-Steuerinformation umfasst;
wobei jeder FEC-Block (56) weiter in ein oder mehrere automatische Wiederholungs-Anforderungs-, ARQ-, Blöcke (58) unterteilt ist, so dass jeder ARQ-Block (58) Informations-Bits (60) und Zusatz-Bits (62) einschließt; und
wobei die Zusatz-Bits sowohl zyklische Blocksicherungs-Code-, CRC-, Bits als auch Faltungs-Endbits einschließen.

9. Vorrichtung zur Verwendung in einem persönlichen drahtlosen Kommunikationsdienst-Netz (10), wobei die Vorrichtung Folgendes umfasst:

einen Eingang, der zum Empfang von Informations-Bits von einer Mobilstation angeordnet ist;
einen Ausgang, der zur Lieferung der Informations-Bits an ein zweites Netzwerk angeordnet ist; und
Verarbeitungseinrichtungen, die zur Anordnung der Informations-Bits in einer Rahmenstruktur angeordnet sind, die ein oder mehrere Vorwärtsfehlersteuer-, FEC-, Blöcke (56) zur Übertragung von Fehler-Steuerinformation umfasst;
wobei jeder FEC-Block (56) weiterhin in ein oder mehrerer automatische Wiederholungs-Anforderungs-, ARQ-, Blöcke (58) unterteilt ist, so dass jeder ARQ-Block (58) Informations-Bits (60) und Zusatz-Bits (62) einschließt; und
wobei die Zusatz-Bits (62) zyklische Blocksicherungs-, CRC-, Bits, jedoch keine Faltungs-Endbits, einschließen, und wobei ein oder mehrere Faltungs-Endbits an die Rahmenstruktur angehängt werden.

10. Vorrichtung nach Anspruch 9, bei dem die Rahmenstruktur mehrfache drahtlose Umgebungen in dem drahtlosen Spreizspektrum-Netzwerk unterstützt, so dass die Anzahl der ARQ-Blöcke (58) von der Umgebung abhängt, um einen relativ hohen Durchsatz zu erzeugen.

11. Vorrichtung nach Anspruch 9, bei der die Rahmenstruktur mehrfache Kommunikations-Typen in einem drahtlosen Spreizspektrum-Netz unterstützt, und bei dem die Anzahl von ARQ-Blöcken (58) davon abhängt, ob der Kommunikations-Typ Sprache oder Daten ist.

12. Vorrichtung nach Anspruch 9, bei der die Rahmenstruktur einen Faltungs-FEC-Code unterstützt, und bei der die Zusatz-Bits (62) der ARQ-Blöcke (58) effektiv den Faltungs-FEC-Code blockieren.

13. Vorrichtung nach Anspruch 9, bei der die Anzahl der FEC-Blöcke (56) und der ARQ-Blöcke (58) modifizierbar ist, um Anforderungen für die Datenübertragung und die Sprachübertragung auszugleichen.

**14.** Vorrichtung nach Anspruch 9, bei der die Anzahl der FEC-Blöcke (56) und der ARQ-Blöcke (58) modifizierbar ist, um einen effizienten Betrieb in Abhängigkeit von einer drahtlosen Umgebung und der Kompliziertheit einer Mobilstation zu fördern.

**15.** Vorrichtung nach Anspruch 9, bei der die Anzahl der FEC-Blöcke (56), die Anzahl der ARQ-Blöcke (58) und die Anzahl der Informations-Bits (60) in den ARQ-Blöcken (58) modifizierbar ist, um unterschiedliche Übertragungsraten zu berücksichtigen.

**16.** Vorrichtung zur Verwendung in einem persönlichen drahtlosen Kommunikationsdienst-Netz (10), wobei die Vorrichtung Folgendes umfasst:

einen Eingang, der zum Empfang von Informations-Bits von einer Mobilstation angeordnet ist;
einen Ausgang, der zur Lieferung der Informations-Bits an ein zweites Netz angeordnet ist; und
Verarbeitungseinrichtungen, die zur Anordnung der Informations-Bits in einer Rahmenstruktur angeordnet sind, die ein oder mehrere VorwärtsfehlerSteuer-, FEC-, Blöcke (56) zur Übertragung von Fehler-Steuerinformation umfasst;
wobei jeder FEC-Block (56) weiter in ein oder mehrerer automatische Wiederholungs-Anforderungs-, ARQ-, Blöcke (58) unterteilt ist, so dass jeder ARQ-Block (58) Informations-Bits (60) und Zusatz-Bits (62) einschließt; und
wobei die Zusatz-Bits sowohl zyklische Blocksicherungs-Code-(CRC-) Bits als auch Faltungs-Endbits einschließen.

**Revendications**

**1.** Procédé pour communiquer dans un réseau sans fil de service de communications personnelles (10), le procédé comprenant :

recevoir des bits d'information d'une station mobile ;
transmettre les bits d'information à un deuxième réseau ; et
agencer les bits d'information en une structure de trame comprenant un ou plusieurs blocs de contrôle continu d'erreur, FEC, (56) pour transmettre des informations de contrôle d'erreur ;
dans lequel chaque bloc FEC (56) est en outre subdivisé en un ou plusieurs blocs de demande de répétition automatique, ARQ, (58) de sorte que chaque bloc ARQ (58) comprenne des bits d'information (60) et des bits de surdébit (62) ; et
dans lequel les bits de surdébit (62) comprennent des bits de code de redondance cyclique, CRC, mais pas de bits de queue de convolution, et dans lequel un ou plusieurs bits de queue de convolution sont joints à la structure de trame.

**2.** Procédé selon la revendication 1, dans lequel l'étape d'agencement prend en charge de multiples environnements sans fil dans le réseau sans fil à spectre étalé de sorte que le nombre de blocs ARQ (58) dépend de l'environnement pour produire un débit relativement élevé.

**3.** Procédé selon la revendication 1, dans lequel l'étape d'agencement prend en charge de multiples types de communications dans le réseau sans fil à spectre étalé, et dans lequel le nombre de blocs ARQ (58) dépend du fait que le type de communication est de la voix ou des données.

**4.** Procédé selon la revendication 1, dans lequel l'étape d'agencement prend en charge un code FEC convolutionnel, et dans lequel les bits de surdébit (62) des blocs ARQ (58) bloquent réellement le code FEC convolutionnel.

**5.** Procédé selon la revendication 1, dans lequel l'étape d'agencement modifie le nombre de blocs FEC (56) et de blocs ARQ (58) pour équilibrer les spécifications pour la transmission de données et la transmission de voix.

**6.** Procédé selon la revendication 1, dans lequel l'étape d'agencement modifie le nombre de blocs FEC (56) et de blocs ARQ (58) pour favoriser un fonctionnement efficace en fonction d'une complexité de l'environnement sans fil et de la station mobile.

**7.** Procédé selon la revendication 1, dans lequel l'étape d'agencement modifie le nombre de blocs FEC (56), le nombre de blocs ARQ (58) et le nombre de bits d'information (60) dans les blocs ARQ (58), pour s'adapter à différents débits de transmission.

**8.** Procédé pour communiquer dans un réseau sans fil de service de communications personnelles (10), le procédé comprenant :

recevoir des bits d'information d'une station mobile ;
transmettre les bits d'information à un deuxième réseau ; et
agencer les bits d'information en une structure de trame comprenant un ou plusieurs blocs de contrôle continu d'erreur, FEC, (56) pour transmettre des informations de contrôle d'erreur ;
dans lequel chaque bloc FEC (56) est en outre subdivisé en un ou plusieurs blocs de demande de répétition automatique, ARQ, (58) de sorte que chaque bloc ARQ (58) comprenne des bits d'information (60) et des bits de surdébit (62) ; et
dans lequel les bits de surdébit comprennent à la fois des bits de code de redondance cyclique, CRC, et des bits de queue de convolution.

**9.** Dispositif destiné à être utilisé dans un réseau sans fil de service de communications personnelles (10), le dispositif comprenant :

une entrée agencée pour recevoir des bits d'information d'une station mobile ;
une sortie agencée pour transmettre les bits d'information à un deuxième réseau ; et
des moyens de traitement agencés pour agencer les bits d'information en une structure de trame comprenant un ou plusieurs blocs de contrôle continu d'erreur, FEC, (56) pour transmettre des informations de contrôle d'erreur ;
dans lequel chaque bloc FEC (56) est en outre subdivisé en un ou plusieurs blocs de demande de répétition automatique, ARQ, (58) de sorte que chaque bloc ARQ (58) comprenne des bits d'information (60) et des bits de surdébit (62) ; et
dans lequel les bits de surdébit (62) comprennent des bits de code de redondance cyclique, CRC, mais pas de bits de queue de convolution, et dans lequel un ou plusieurs bits de queue de convolution sont joints à la structure de trame.

**10.** Dispositif selon la revendication 9, dans lequel la structure de trame prend en charge de multiples environnements sans fil dans le réseau sans fil à spectre étalé de sorte que le nombre de blocs ARQ (58) dépend de l'environnement pour produire un débit relativement élevé.

**11.** Dispositif selon la revendication 9, dans lequel la structure de trame prend en charge de multiples types de communications dans le réseau sans fil à spectre étalé, et dans lequel le nombre de blocs ARQ (58) dépend du fait que le type de communication est de la voix ou des données.

**12.** Dispositif selon la revendication 9, dans lequel la structure de trame prend en charge un code FEC convolutionnel, et dans lequel les bits de surdébit (62) des blocs ARQ (58) bloquent réellement le code FEC convolutionnel.

**13.** Dispositif selon la revendication 9, dans lequel le nombre de blocs FEC (56) et de blocs ARQ (58) peut être modifié pour équilibrer les spécifications pour la transmission de données et la transmission de voix.

**14.** Dispositif selon la revendication 9, dans lequel le nombre de blocs FEC (56) et de blocs ARQ (58) peut être modifié pour favoriser un fonctionnement efficace en fonction d'une complexité de l'environnement sans fil et de la station mobile.

**15.** Dispositif selon la revendication 9, dans lequel le nombre de blocs FEC (56), le nombre de blocs ARQ (58) et le nombre de bits d'information (60) dans les blocs ARQ (58) peuvent être modifiés pour s'adapter à différents débits de transmission.

**16.** Dispositif destiné à être utilisé dans un réseau sans fil de service de communications personnelles (10), le dispositif comprenant :

une entrée agencée pour recevoir des bits d'information d'une station mobile ;
une sortie agencée pour transmettre les bits d'information à un deuxième réseau ; et

des moyens de traitement agencés pour agencer les bits d'information en une structure de trame comprenant un ou plusieurs blocs de contrôle continu d'erreur, FEC, (56) pour transmettre des informations de contrôle d'erreur ;

dans lequel chaque bloc FEC (56) est en outre subdivisé en un ou plusieurs blocs de demande de répétition automatique, ARQ, (58) de sorte que chaque bloc ARQ (58) comprenne des bits d'information (60) et des bits de surdébit (62) ; et

dans lequel les bits de surdébit comprennent à la fois des bits de code de redondance cyclique (CRC) et des bits de queue de convolution.

*Fig. 1*

10

12

16

16

14a

14b

20

18

RAN

24

30

32

22 — BSC

MSC

31

DATA NETWORK

VOICE NETWORK

28

*Fig. 2*

50

54
← INTERLEAVER BLOCK →

52
← PHYSICAL LAYER FRAME →

56
← FEC BLOCK →

58
← ARQ BLOCK →

58a

| ARQ BLOCK | o o o | ARQ BLOCK | o o o |

58a

| TAIL BITS, RESERVE BITS, ZERO PADDING | INFORMATION BITS | ← 58a |

62

60

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60096886 B
- JP 09214474 A
- US 5844918 A